(19) **Europäisches Patentamt**
**European Patent Office**
**Office européen des brevets**

(11) **EP 1 264 728 A2**

(12) **EUROPÄISCHE PATENTANMELDUNG**

(43) Veröffentlichungstag:
**11.12.2002 Patentblatt 2002/50**

(51) Int Cl.⁷: **B60L 15/00**

(21) Anmeldenummer: **02012000.2**

(22) Anmeldetag: **31.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **09.06.2001 DE 10128074**

(71) Anmelder: **Aradex AG**
**73547 Lorch (DE)**

(72) Erfinder:
• **Vetter, Thomas**
**73547 Lorch (Württemberg) (DE)**
• **Eha, Johannes**
**73529 Schwäbisch Gmünd/Degenfeld (DE)**

(74) Vertreter: **Ruckh, Rainer Gerhard, Dr.**
**Fabrikstrasse 18**
**73277 Owen/Teck (DE)**

(54) **Lineare Transportvorrichtung**

(57) Die Erfindung betrifft eine Transportvorrichtung mit einer Linearmotorstrecke (2) bestehend aus einer Anordnung von Primärteilen, in welchen jeweils durch Bestromung über eine Stromregeleinheit ein Magnetfeld generiert wird, und aus magnetischen Sekundärteilen, welche durch die in den Primärteilen generierten Magnetfelder in einer Transportrichtung bewegt werden. Die oder jede Stromregeleinheit weist eine Erfassungseinheit zur Ermittlung der Stellgröße der Stromregelung und eine Rechnereinheit auf, in welcher aus der Stellgröße und der von der Relativposition des Sekundärteils zu dem jeweiligen Primärteil abhängigen induzierten Spannung $U_{ind}$ in dem Primärteil und/oder der Induktivität (L) des Primärteils die Relativposition des Sekundärteils zum Primärteil ermittelt wird.

**Fig. 1**

**Beschreibung**

Die Erfindung betrifft eine Transportvorrichtung gemäß dem Oberbegriff des Anspruchs 1.

Derartige Transportvorrichtungen werden insbesondere in Folienreckanlagen eingesetzt. Die Transportvorrichtung weist eine Linearmotorstrecke auf, die im Wesentlichen aus einer Anordnung von stationären Primärteilen und beweglichen Sekundärteilen besteht.

Bei Folienreckanlagen sind zwei jeweils eine geschlossene Bahn bildende Anordnungen von Primärteilen vorgesehen, auf welchen als Kluppen ausgebildete Sekundärteile umlaufen. Die Kluppen an den Innenseiten der Bahnen liegen paarweise aneinander gegenüber und dienen zur Aufnahme einer zu streckenden Kunststofffolie.

Durch eine Beschleunigung der Kluppen wird die Kunststofffolie in Längsrichtung gestreckt. Zudem sind die Bahnen der Primärteile so ausgebildet, dass sich der Abstand der Kluppen an den Innenseiten der Bahnen vergrößert, wodurch auch eine Streckung der Kunststofffolie in Querrichtung erzielt wird. Nach Durchlaufen der Umkehrpunkte der Bahnen laufen die Kluppen nach Ablösen von der Kunststofffolie auf den Außenseiten der Bahnen wieder zum Anfangspunkt der jeweiligen Bahn zurück und stehen von neuem zur Aufnahme der Kunststofffolie bereit.

Die Primärteile derartiger Linearmotorstrecken sind als Spulen ausgebildet, welche jeweils um einen Eisenkern gewickelt sind. Die Sekundärteile weisen jeweils einen Permanentmagneten auf. Durch eine vorgegebene Bestromung der Spulen der Primärteile werden in diesem Magnetfelder generiert, welche die Sekundärteile antreiben.

Derartige Linearmotorstrecken werden ohne externe Sensoren und deren Verdrahtungen betrieben, da dies bei derartigen Anlagen, insbesondere Folienreckanlagen, einen äußerst großen konstruktiven Aufwand bedeuten würde. Daher werden derartige Linearmotorstrecken ohne eine Positionsbestimmung der einzelnen Kluppen betrieben. Die Kluppen werden vielmehr ohne Informationen über deren aktuellen Positionen einem rein gesteuerten Schrittbetrieb angetrieben.

Dies führt zum einen zu einer unbefriedigenden Positioniergenauigkeit der Kluppen und dadurch bedingt zu Qualitätseinbußen bei dem Streckvorgang der Kunststofffolien.

Ein weiterer Nachteil eines derartigen Betriebs einer Folienreckanlage besteht darin, dass mangels Informationen über die Positionen der Kluppen diese mit Strömen in den Primärteilen angetrieben werden, die höher sind als für den jeweiligen Streckvorgang notwendig wäre. Der Energieverbrauch für den Betrieb der Folienreckanlage ist daher unerwünscht hoch.

Aus der DE 196 34 449C2 ist eine Steuerungsvorrichtung für linearmotorgetriebene Einrichtungen, insbesondere zum Antrieb von Kluppen einer Folienreckanlage bekannt. Die Steuerungsvorrichtung weist eine Steuereinheit auf, welche eine Anzahl von Umrichtern ansteuert. Den Umrichtern ist jeweils eine Zone eines Primärteils einer Linearmotorstrecke zugeordnet, in welcher die in der betreffenden Zone vorgesehenen Statorwicklungen des Linearmotorantriebs zum Antrieb zumindest eines längs des Primärteils verfahrbaren Sekundärteils ansteuerbar sind.

Jedem Umrichter ist eine Rechnereinheit zugeordnet, in welcher in Abhängigkeit von Zeittaktsignalen vorgegebene Phasenprofile und Geschwindigkeitsprofile abgespeichert sind.

Zur Steuerung der Linearmotorstrecke werden von der Steuereinheit die einzelnen Phasenprofile und Geschwindigkeitsprofile abgerufen und die Bewegungen des Sekundärteils entsprechend gesteuert.

Auch in diesem Fall erfolgt die Steuerung der Kluppen ohne dass deren aktuelle Positionen bestimmt werden. Daher ist auch bei dieser Linearmotorstrecke eine genaue Positionierung der Kluppen prinzipiell nicht möglich.

Der Erfindung liegt die Aufgabe zugrunde, eine Transportvorrichtung mit einer Linearmotorstrecke so auszubilden, dass ohne externe Sensorik ein lagegeregelter Betrieb der Linearmotorstrecke ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Transportvorrichtung weist eine Linearmotorstrecke bestehend aus einer Anordnung von Primärteilen auf, in welchen jeweils durch Bestromung über eine Stromregeleinheit ein Magnetfeld generiert wird. Weiterhin weist die erfindungsgemäße Transportvorrichtung magnetische Sekundärteile auf, welche durch die in den Primärteilen generierten Magnetfelder in einer Transportrichtung bewegt werden. Die oder jede Stomregeleinheit weist eine Erfassungseinheit zur Ermittlung der Stellgröße der Stromregelung und eine Rechnereinheit auf, in welcher aus der Stellgröße und der von der Relativposition eines Sekundärteils zu dem jeweiligen Primärteil abhängigen induzierten Spannung in dem Primärteil und/oder der Induktivität des Primärteils die Relativposition des Sekundärteils zum Primärteil ermittelt wird.

Der Grundgedanke der Erfindung besteht somit darin, dass durch die Erfassung der Stellgrößen der Stromregelungen als interne Parameter der Stromregeleinheiten für die Primärteile eine Positionsbestimmung der beweglichen Sekundärteile der Linearmotorstrecke ermöglicht wird.

Die Stellgröße ist insbesondere von der Klemmenspannung an einem Primärteil gebildet, wobei deren Betrag durch eine geeignete Pulsweitenmodulation vorgebbar ist.

Ein wesentlicher Vorteil der erfindungsgemäßen Transportvorrichtung besteht dabei darin, dass zur Positionsbestimmung der Sekundärteile keine externen Sensoren vorgesehen werden müssen. Der Verkabelungs- und Verdrahtungsaufwand zur Installation derartiger Sensorsysteme entfällt somit.

Damit wird ein lagegeregelter Betrieb der Transportvorrichtung gewährleistet, ohne dass Verdrahtungen oder Verkabelungen für die Linearmotorstrecke vorgesehen werden müssen.

Die erfindungsgemäße Transportvorrichtung eignet sich damit insbesondere für den Einsatz in explosionsgeschützten Anlagen.

In derartigen Anlagen wird eine explosionssichere Ausführung der Linearmotorstrecke durch eine geeignete Kapselung der Einzelkomponenten erreicht. Kabelzuführungen zu diesen Einheiten stellen ein zusätzliches Gefahrenpotential dar, das heißt eine Ausführung einer Linearmotorstrecke mit externer Verdrahtung bedeutet eine erhöhte Explosionsgefahr, deren Vermeidung aufwendige Zusatzmaßnahmen mit sich führen würde.

Ein Beispiel für derartige Anwendungen stellen Dosieranlagen in der chemischen Industrie dar. Bei derartigen Applikationen ist die Linearmotorstrecke vorteilhaft durch einen rotativen Synchronmotor mit rotationssymmetrisch angeordneten Primärteilen und Sekundärteilen ersetzt.

Die erfindungsgemäße Transportvorrichtung ist generell dann vorteilhaft einsetzbar, wenn die zu transportierenden Medien in einem kontinuierlichen Bewegungsablauf positionsgenau gesteuert werden müssen. Derartige Bewegungen lassen sich mit der lagegeregelten, erfindungsgemäßen Linearmotorstrecke exakt und reproduzierbar steuern, während dies bei bekannten, herkömmlichen Systemen, welche beispielsweise mit Asynchronmotoren arbeiten, die über Frequenzumrichter gesteuert sind, nicht möglich ist.

Besonders vorteilhaft wird die erfindungsgemäße Transportvorrichtung in Folienreckanlagen eingesetzt. In derartigen Folienreckanlagen sind die Sekundärteile von Kluppen gebildet, welche zur Aufnahme einer zu streckenden Kunststofffolie dienen.

Die Streckung der Kunststofffolie erfolgt sowohl in deren Förderrichtung als auch quer zur Bewegungsrichtung. Durch die Positionsbestimmung der einzelnen Kluppen können die Bewegungsprofile der Kluppen exakt vorgegeben werden, wodurch eine reproduzierbare, hohe Qualität der gestreckten Kunststofffolien erzielt wird.

Durch die erfindungsgemäße Lageregelung der Kluppen kann zudem die Bestromung der Primärteile exakt an die gewünschten Bewegungsprofile der Kluppen angepasst werden. Dadurch wird gegenüber Linearmotorstrecken mit ungeregelten Kluppenbewegungen der Strombedarf zu deren Antrieb erheblich gesenkt.

Bei der erfindungsgemäßen Transportvorrichtung ist jedem Primärteil ein Antriebsverstärker mit einer Stromregeleinheit zugeordnet. Dadurch wird in jedem Primärteil die Position eines an diesem vorbeibewegten Sekundärteils bestimmt. Die einzelnen Positionswerte, die in den Antriebsverstärkern ermittelt wurden, werden in wenigstens eine zentrale Steuereinheit eingelesen, so dass dort sämtliche Positionswerte vorliegen. Anhand dieser Daten wird in der Steuereinheit insbesondere der Übergang eines Sekundärteils von einem Primärteil zum nächsten bestimmt. Dadurch kann der Verlauf der Sekundärteile entlang der Linearmotorstrecke lückenlos verfolgt werden.

In einer vorteilhaften Ausführungsform kann eine Betriebsartumschaltung bei der mit der erfindungsgemäßen Transportvorrichtung betriebenen Folienreckanlage vorgesehen sein, wobei die Umschaltung vorzugsweise in Abhängigkeit der Geschwindigkeit der Kluppen erfolgt.

Oberhalb einer vorgegebenen Grenzgeschwindigkeit erfolgt dabei die Positionsbestimmung der Kluppen durch Erfassen der elektromotorischen Kräfte in den Primärteilen. Dabei wird vorteilhaft der Strom im Primärteil auf einen konstanten Wert geregelt, so dass der über eine Periodendauer der Pulsweitenmodulation gemittelte Wert der an der Induktivität des Primärteils anfallenden Spannung den Wert Null annimmt. Damit erfordert die Positionsbestimmung einen relativ geringen rechnerischen Aufwand und ermöglicht zudem eine genaue und reproduzierbare Erfassung der Kluppenpositionen.

Da die induzierte Spannung proportional zur Geschwindigkeit der Kluppen ist, wird bei geringen Geschwindigkeiten eine Positionsbestimmung mittels dieser Methode zunehmend ungenau.

Daher erfolgt bei Erreichen der Grenzgeschwindigkeit ein Umschalten der Betriebsart, welches derart ausgebildet sein kann, dass unterhalb der Grenzgeschwindigkeit zur Positionsbestimmung einer Kluppe die Induktivitäten in den einzelnen Primärteilen erfasst werden, welche jeweils von dem Überlappungsgrad eines Primärteils und eines Sekundärteils abhängig sind.

In einer alternativen, besonders einfachen Ausführungsform kann die Bewegung der Kluppen unterhalb der Grenzgeschwindigkeit auch in einem gesteuerten Schrittbetrieb, das heißt ohne Lageregelung erfolgen. Dabei wird der Umstand ausgenutzt, dass die Lageregelung der Kluppen nur während des eigentlichen Streckvorganges der Kunststofffolie notwendig ist, bei welchem diese auf Geschwindigkeiten beschleunigt werden, die signifikant oberhalb der Grenzgeschwindigkeit liegen.

Die Erfindung wird im nachstehenden anhand der Zeichnungen erläutert. Es zeigen:

Figur 1:    Schematische Darstellung eines Ausschnitts einer Folienreckanlage.

Figur 2:    Schematische Darstellung eines Ausschnitts einer Linearmotorstrecke für eine Folienreckanlage.

Figur 3:    Prinzipschaltbild eines Primärteils der Linearmotorstrecke.

Figur 4: Zeitlicher Verlauf der Klemmenspannung an einem Primärteil.

Figur 5: Zeitlicher Verlauf der induzierten Spannungen in einem Primärteil.

Figur 6: Anordnung von an eine Steuereinheit angeschlossenen Primärteilen.

In den nachstehend beschriebenen Ausführungsbeispielen wird die erfindungsgemäße Transportvorrichtung in einer Folienreckanlage 1 eingesetzt. Dabei ist die erfindungsgemäße Transportvorrichtung nicht auf diese Anwendung begrenzt. Beispielsweise kann die Transportvorrichtung auch zur Steuerung von Dosieranlagen im Bereich der Chemieindustrie eingesetzt werden.

Die Transportvorrichtung weist eine Linearmotorstrecke 2 auf, die aus einer Anordnung von stationären Primärteilen und beweglichen Sekundärteilen besteht.

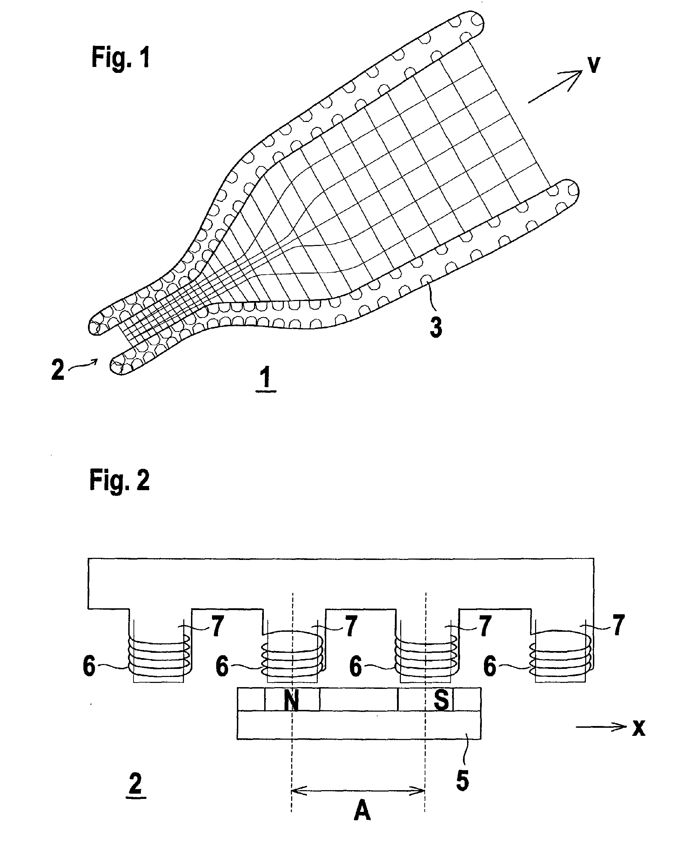

Die Sekundärteile sind von Kluppen 3 gebildet, die zur Aufnahme einer zu streckenden Kunststofffolie 4 dienen. Eine typische Anordnung derartiger Kluppen 3 ist in Figur 1 dargestellt. Die mittels der Kluppen 3 zu streckende Kunststofffolie 4 wird in einer vorgegebenen Förderrichtung v transportiert.

Zur Aufnahme der Kunststoffbahn sind zwei in Abstand zueinander jeweils längs einer geschlossenen Bahn verlaufende Anordnungen von Kluppen 3 vorgesehen, wobei die Anordnungen symmetrisch zur Längsachse der Kunststofffolie 4 ausgebildet sind.

Die Kluppen 3 an den Innenseiten der Bahnen liegen paarweise in Abstand gegenüber und greifen die Kunststofffolie 4 an ihren längsseitigen Rändern. Wie aus Figur 1 ersichtlich liegen dabei die Kluppen 3 am Anfang der Bahnen zunächst in geringem Abstand zueinander, dann vergrößern sich die Abstände kontinuierlich bis auf einen Maximalwert, welcher der Endbreite auf welche die Kunststofffolie 4 gestreckt werden soll, entspricht. Durch diese Anordnung der Kluppen 3 wird die Kunststofffolie 4 am Anfang der Bahnen von den dort befindlichen Kluppen 3 aufgenommen und in Querrichtung in definierter Weise gestreckt.

Zudem werden die Kluppen 3 bei Ihrer Bewegung längs der genannten Bahnen beschleunigt, so dass die Abstände benachbarter Kluppen 3 vom Anfang der Bahnen bis zu deren Ende kontinuierlich vergrößert werden, wodurch eine Längsstreckung der Kunststofffolie 4 erfolgt.

Sobald eine Kluppe 3 das Ende der von der Kunststofffolie 4 durchlaufenen Wegstrecke erreicht hat, wird diese von der Kunststofffolie 4 gelöst und auf der der Kunststofffolie 4 abgewandten Außenseite der Bahn wieder zum Anfangspunkt der Bahn zurück transportiert, wo diese wieder zur Aufnahme der Kunststofffolie 4 zur Verfügung steht.

Figur 2 zeigt eine Prinzipanordnung der Linearmotorstrecke 2. Die Primärteile der Linearmotorstrecke 2 sind in typischerweise variablen Abständen hintereinander angeordnet.

Die Sekundärteile bestehen jeweils aus einem Permanentmagneten 5, dessen mit N und S bezeichnete Pole in einem Polabstand zueinander liegen.

Jeder Primärteil weist jeweils drei Statorwicklungen auf, die von jeweils einer Spule 6 und einem in dieser verlaufenden Eisenkern 7 gebildet sind. Die Spulen 6 eines Primärteils werden mit zueinander phasenversetzten Strömen $I = I_a$, $I_b$, $I_c$ angesteuert, wodurch in den Spulen 6 Magnetfelder erzeugt werden, die sich zu einem Wanderfeld überlagern, welches den Sekundärteil in Transportrichtung v vorwärts bewegt.

Aus Gründen der Übersichtlichkeit ist in Figur 2 für jeden Primärteil jeweils nur die zu einer Phase gehörende Spule 6 mit Eisenkern 7 dargestellt. Diese Spulen 6 liegen ebenfalls jeweils im Abstand A zueinander entfernt. Dasselbe gilt jeweils auch für die zu den anderen Phasen gehörenden Spulen 6.

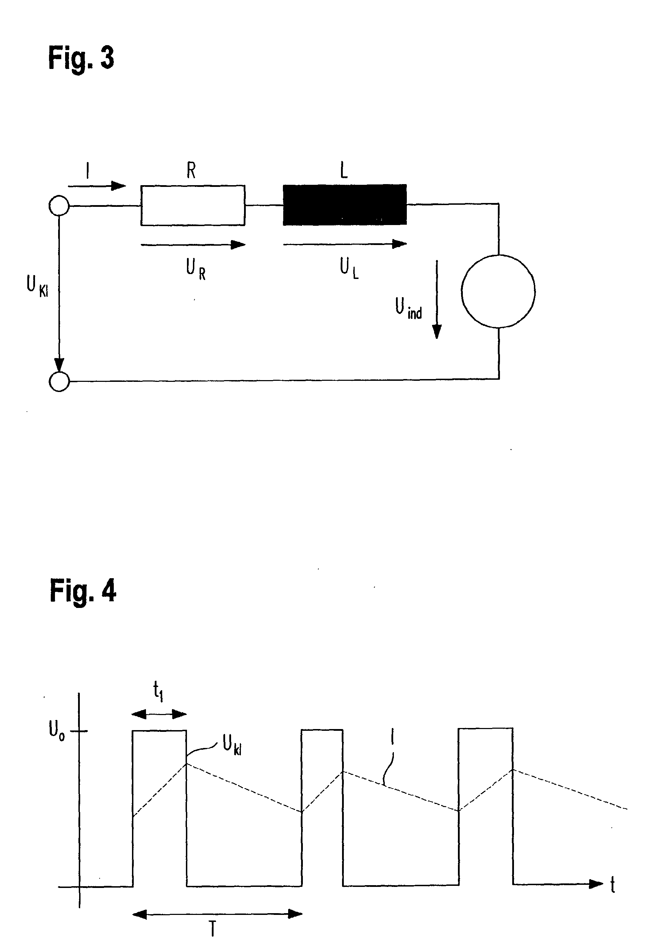

Figur 3 zeigt ein Prinzipschaltbild mit den in einem Primärteil anfallenden Spannungen. Zur Generierung des Stromes I in einem Primärteil wird an diese eine Klemmenspannung $U_{K1}$ angelegt. Entsprechend der Zahl der Statorwicklungen werden in den einzelnen Spulen 6 drei phasenversetzte Ströme $I = I_a$, $I_b$, $I_c$ generiert. Für jede Phase entspricht die Klemmenspannung $U_{K1}$ der Summe folgender Teilspannungen:

$$U_{K1} = U_L + U_R + U_{ind}.$$

Die Spannung $U_L$ ist durch die Beziehung

$$U_L = L \cdot I_t$$

definiert, wobei L die Induktivität der Spule 6 und des Eisenkerns 7 des Primärteils ist. $I_t$ ist die zeitliche Ableitung des Stromes der jeweiligen Phase des Primärteils.

Die Spannung $U_R$ ist durch die Beziehung

$$U_R = R \cdot I$$

definiert und stellt die am ohmschen Widerstand des Primärteils anfallende Spannung dar.

$U_{ind}$ bildet die induzierte Spannung, die in einem Primärteil durch ein an diesem vorbeibewegten Sekundärteil generiert wird.

Die induzierte Spannung $U_{ind}$ hängt von der Relativposition x des Sekundärteils zum Primärteil gemäß folgender Beziehung ab:

$$U_{ind} = k \cdot x_t \cdot \sin(2\pi x/2A)$$

wobei k eine ortsunabhängige Konstante ist und $x_t$ die Geschwindigkeit des jeweiligen Sekundärteils ist. Bei dieser Beziehung für $U_{ind}$ ist der Nullpunkt x = 0 derart definiert, dass dann die Pole des Sekundärteils jeweils einem Eisenkern 7 zweier benachbarter Primärteile gegenüber liegen.

Die Bewegungen der Sekundärteile erfolgen über eine Regelung in Abhängigkeit der Positionen der jeweiligen Sekundärteile.

Zur Durchführung der lagegeregelten Bewegung der Sekundärteile ist jedem Primärteil eine nicht dargestellte Stromregeleinheit mit einer Rechnereinheit und Stellgliedern zugeordnet.

Der Strom in dem Primärteil wird über die Rechnereinheit und die Stellglieder durch Vorgabe der Klemmenspannung $U_{K1}$ eingestellt. Die Klemmenspannung $U_{K1}$ wird über die Stellglieder zur Vorgabe Stromes I in geeigneter Weise pulsweitenmoduliert. Dies bedeutet, dass mittels der Stellglieder eine pulsförmige Klemmenspannung $U_{K1}$, wie in Figur 4 dargestellt, vorgegeben wird. Die Periodendauer der Pulsfolge der in Figur 4 dargestellten Spannungspulse ist mit T bezeichnet, die Pulsdauer eines Spannungspulses ist mit $t_1$ bezeichnet. Weiterhin ist der in dem Primärteil generierte Strom I in Figur 4 dargestellt.

Zur Einstellung des Betrags der Klemmenspannung $U_{K1}$ wird über die Stellglieder des Einschaltverhältnis dieser Pulsfolge verändert, wobei der Maximalwert $U_0$ der Spannungspulse unverändert bleibt. Entsprechend dem gewählten Einschaltverhältnis wird als über eine ganze Zahl von Periodendauern T gemittelter Wert $<U_{K1}> = U_0 \cdot t_1/T$ erhalten.

Die Stellglieder zur Einstellung der Klemmenspannungen $U_{K1}$ sind von elektronischen Schaltelementen, insbesondere Transistoren, gebildet. Besonders geeignet sind hierfür MOSFET- und IGBT-Transistoren.

Zur Erfassung der Positionen eines Sekundärteils relativ zu einem Primärteil wird in diesem die von den Stellgliedern erzeugte pulsförmige Klemmenspannung $U_{K1}$ erfasst und in die Rechnereinheit eingelesen.

In der Rechnereinheit wird anhand der so ermittelten Klemmenspannung $U_{K1}$ und aus den von der Relativposition zwischen Sekundärteil und Primärteil abhängigen Größen, nämlich der induzierten Spannung $U_{ind}$ und/oder der Induktivität L des Primärteils, die Position des Sekundärteils relativ zum Primärteil ermittelt.

Insbesondere bei großen Geschwindigkeiten, bei welchen die induzierte Spannung $U_{ind}$ hinreichend groß ist, wird die Position der Sekundärteile allein anhand des Verlaufs der induzierten Spannung $U_{ind}$ bestimmt.

Dabei ist der Strom in dem jeweiligen Primärteil auf einen Wert geregelt, der über eine Periodendauer T der pulsweitenmodulierten Pulsfolge der Spannungspulse der Klemmenspannung $U_{K1}$ konstant ist, so dass ein Mittelwert der Spannung $U_L$ den Wert null annimmt. Dann ist bei bekannter Spannung $U_R$ und der gemessenen mittleren Klemmenspannung $<U_{K1}>$ die Position des Sekundärteils durch den Verlauf von $U_{ind}$ eindeutig bestimmt.

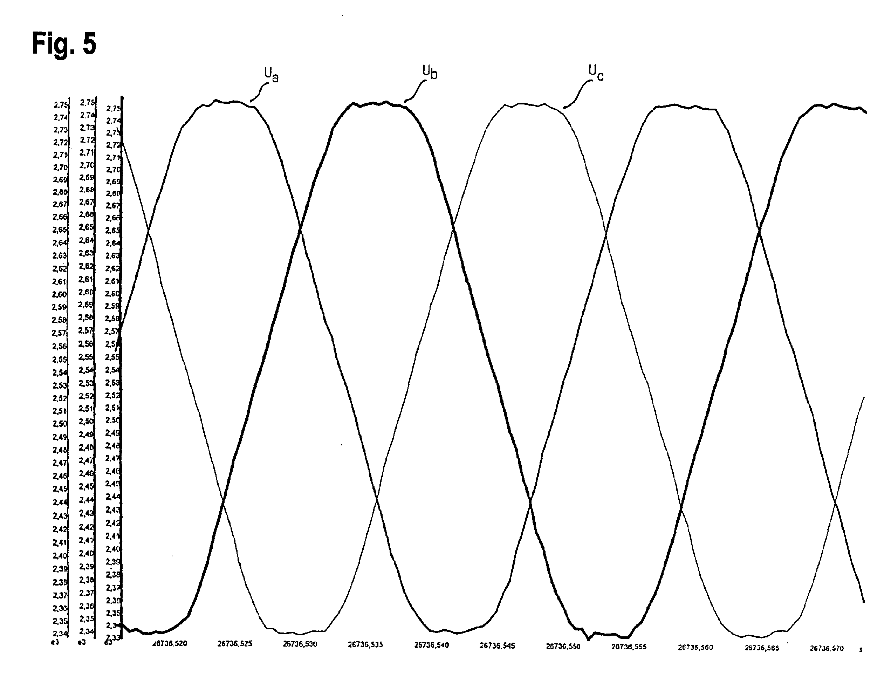

Ein Beispiel für die so gemessenen Spannungen $U_a$, $U_b$, $U_c$ für die drei Phasen eines Primärteils ist in Figur 5 dargestellt. Wie aus den Messergebnissen gemäß Figur 5 ersichtlich wird der sinusförmige Verlauf der induzierten Spannung $U_{ind}$ mit einer hohen Auflösung erhalten. Anhand der so gemessenen Spannungsverläufe wird in der Rechnereinheit aus der Beziehung

$$U_{ind} = k \cdot x_t \cdot \sin (2\pi x/2 \cdot A)$$

die aktuelle Position des jeweiligen Sekundärteils berechnet. Dabei erfolgt die Positionsbestimmung jeweils einmal und jeweils zum selben Zeitpunkt innerhalb einer Periodendauer, so dass die zeitliche Variation des Stromes I innerhalb einer Periodendauer das Messergebnis nicht verfälscht.

Bei sehr kleinen Geschwindigkeiten der Sekundärteile ist die induzierte Spannung $U_{ind}$ entsprechend gering, so dass in diesem Fall die Positionsbestimmung über die Auswertung der Spannung $U_L$ erfolgt.

Dabei wird der Umstand ausgenutzt, dass der von einem Permanentmagneten 5 gebildete Sekundärteil bei Passieren des Primärteils dessen Eisenkern 7 magnetisiert, wodurch die Induktivität L des Primärteils geändert wird. Diese Änderung der Induktivität L des Primärteils ist abhängig von dem Überlappungsgrad mit dem Sekundärteil und damit von der Position des Sekundärteils.

Auch in diesem Fall wird zur Positionsbestimmung eines Sekundärteils die Klemmenspannung $U_{K1}$ eines Primärteils in der Rechnereinheit erfasst. Da die induzierte Spannung $U_{ind}$ vernachlässigbar klein ist, ist die Klemmenspannung $U_{K1}$ durch folgende Beziehung definiert:

$$U_{K1} = U_L + U_R = L \cdot I_t + R \cdot I$$

Zur Bestimmung der Induktivität L wird bei gemessenem $U_{K1}$ und bekanntem Widerstand R der zeitliche Verlauf des Stromes I gemäß Figur 4 sowie dessen zeitliche Änderung bestimmt, wobei hierzu der Strom I mit einer hinreichend großen Abtastfrequenz abgetastet wird.

Auf diese Weise sind für jeden Primärteil die Positionen der an diesen vorbeibewegten Sekundärteile bestimmbar.

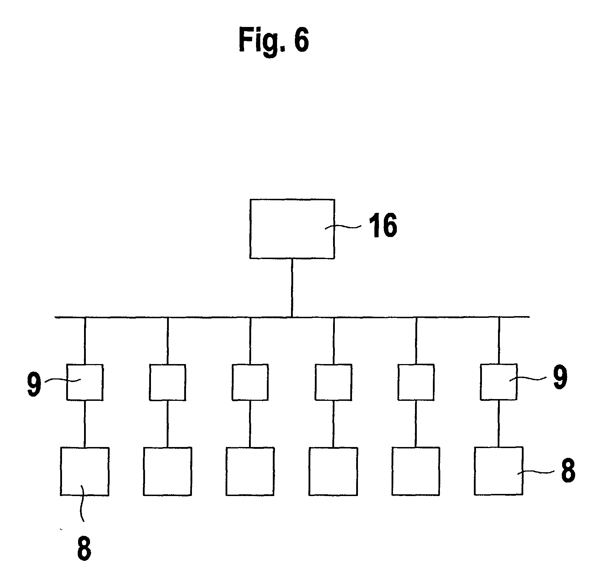

Wie aus Figur 6 ersichtlich ist jedem Primärteil als separate Zone 8 der Linearmotorstrecke 2 ein Antriebsverstärker 9 mit einer Stromregeleinheit zugeordnet. Die einzelnen Antriebsverstärker 9 sind an eine zentrale Steuereinheit 10 angeschlossen. In die Steuereinheit 10 werden die Positionswerte, die in den einzelnen Primärteilen erfasst werden, eingelesen werden, woraus in der Steuereinheit 10 die räumliche Anordnung der Sekundärteile der Linearmotorstrecke 2 zeitabhängig ermittelt wird. Insbesondere ist in der Steuereinheit 10 der Übergang eines Sekundärteils von einem Primärteil zum nächsten erfassbar. In Abhängigkeit davon werden die Sekundärteile entsprechend beschleunigt oder verzögert.

In einer vorteilhaften Ausführungsform weist die Steuereinheit 10 Schaltmittel zur Umschaltung der Betriebsart der Transportvorrichtung, im vorliegenden Fall der Folienreckanlage 1, auf.

Vorzugsweise erfolgt die Umschaltung der Betriebsart selbsttätig bei einer vorgegebenen Grenzgeschwindigkeit. Bei Geschwindigkeiten oberhalb der Grenzgeschwindigkeit erfolgt die Positionsregelung der Sekundärteile in Abhängigkeit von Positionswerten, die durch Bestimmung der elektromotorischen Kräfte in den Primärteilen ermittelt werden.

Dies ist bei der Folienreckanlage 1 gemäß Figur 1 insbesondere dann der Fall, wenn die die Sekundärteile bildenden Kluppen 3 beschleunigt werden und die Kunststofffolie 4 zur Durchführung des Streckvorganges aufnehmen.

Bei Geschwindigkeiten unterhalb der Grenzgeschwindigkeit erfolgt zweckmäßig eine Positionsregelung in Abhängigkeit von Positionswerten, die durch Ermittlung der Induktivitäten L bestimmt werden. Alternativ kann in diesem Fall auf eine Positionsregelung komplett verzichtet werden, so dass die Folienreckanlage 1 im Schrittbetrieb mit rein gesteuertem Magnetfeld betrieben wird.

Dies ist insbesondere für Kluppen 3 im Bereich des Rücklaufs der Folienreckanlage 1 der Fall. In diesem Bereich sind die Kluppen 3 von der Kunststofffolie 4 abgelöst und laufen frei zum Anfangspunkt der jeweiligen Bahnen zurück. In diesem Bereich kommt es auf eine präzisionsgenaue Bewegung der Kluppen 3 nicht an.

Bezugszeichenliste

(1)    Folienreckanlage
(2)    Linearmotorstrecke
(3)    Kluppen
(4)    Kunststofffolie
(5)    Permanentmagnet
(6)    Spule
(7)    Eisenkern
(8)    separate Zone
(9)    Antriebsverstärker
(10)   Steuereinheit

**Patentansprüche**

1. Transportvorrichtung mit einer Linearmotorstrecke bestehend aus einer Anordnung von Primärteilen, in welchen jeweils durch Bestromung über eine Stromregeleinheit ein Magnetfeld generiert wird, und aus magnetischen Sekundärteilen, welche durch die in den Primärteilen generierten Magnetfelder in einer Transportrichtung bewegt werden, **dadurch gekennzeichnet, dass** die oder jede Stromregeleinheit eine Erfassungseinheit zur Ermittlung der Stellgröße der Stromregelung und eine Rechnereinheit aufweist, in welcher aus der Stellgröße und der von der Relativposition eines Sekundärteils zu dem jeweiligen Primärteil abhängigen induzierten Spannung $U_{ind}$ in dem Primärteil und/ oder der Induktivität (L) des Primärteils die Relativposition des Sekundärteils zum Primärteil ermittelt wird.

2. Transportvorrichtung nach Anspruch 1, **dadurch gekennzeichnet, dass** die Stellgröße von der an einem Primärteil anliegenden Klemmenspannung ($U_{K1}$) gebildet ist, wobei die jeweilige Klemmenspannung ($U_{K1}$) über eine in einem Stellglied erzeugte Pulsfolge pulsweitenmoduliert ist.

3. Transportvorrichtung nach Anspruch 2, **dadurch gekennzeichnet, dass** zur Einstellung des Betrags der jeweiligen Klemmenspannung ($U_{K1}$) das Einschaltverhältnis der Pulsfolge über das zugeordnete Stellglied veränderbar ist.

4. Transportvorrichtung nach einem der Ansprüche 2 oder 3, **dadurch gekennzeichnet, dass** das Stellglied von einem elektronischen Schaltelement, insbesondere einem Transistor, gebildet ist.

5. Transportvorrichtung nach einem der Ansprüche 2 — 4, **dadurch gekennzeichnet, dass** die von dem Stellglied erzeugte Pulsfolge in die Rechnereinheit eingelesen wird.

6. Transportvorrichtung nach einem der Ansprüche 2 — 5, **dadurch gekennzeichnet, dass** die Klemmenspannung ($U_{K1}$) an einem Primärteil durch die Summe

$$U_{K1} = U_{ind} + U_L + U_R$$

definiert ist, wobei $U_{ind}$ die von der Position x eines Sekundärteils relativ zum Primärteil abhängige, induzierte Spannung ist, wobei $U_L$ der Spannungsabfall an der Induktivität (L) des Primärteils ist, und wobei $U_R$ der Spannungsabfall am ohmschen Widerstand (R) des Primärteils ist.

**7.** Transportvorrichtung nach Anspruch 6, **dadurch gekennzeichnet, dass** in der Rechnereinheit bei gemessener Klemmenspannung ($U_{K1}$) die Position eines Sekundärteils relativ zum jeweiligen Primärteil aus dem Verlauf der induzierten Spannung ($U_{ind}$) berechnet wird, wobei der Strom (I) durch den Primärteil auf einen konstanten Wert geregelt ist, so dass der über ein Zeitintervall gemittelte Wert der Spannung $U_L = LI_t$ den Wert null annimmt.

**8.** Transportvorrichtung nach Anspruch 7, **dadurch gekennzeichnet, dass** die Positionsbestimmung des Sekundärteils jeweils einmal innerhalb einer Periodendauer (T) der im Stellglied generierten Pulsfolge erfolgt, und dass das Zeitintervall, über welches der Wert von $U_L$ gemittelt wird, der Periodendauer (T) entspricht.

**9.** Transportvorrichtung nach Anspruch 6, **dadurch gekennzeichnet, dass** die Positionsbestimmung allein durch Ermittlung der von der Relativposition eines Sekundärteils zum jeweiligen Primärteil abhängigen Induktivität (L) dieses Primärteils erfolgt.

**10.** Transportvorrichtung nach Anspruch 9, **dadurch gekennzeichnet, dass** die Positionsbestimmung durch Ermittlung der Induktivität (L) bei geringen Transportgeschwindigkeiten der Sekundärteile erfolgt, bei welchen die induzierte Spannung ($U_{ind}$) im jeweiligen Primärteil vernachlässigbar klein ist.

**11.** Transportvorrichtung nach einem der Ansprüche 9 oder 10, **dadurch gekennzeichnet, dass** jeder Sekundärteil einen Permanentmagneten (5) aufweist, wobei die von dem Überlappungsgrad des jeweiligen Sekundärteils und Primärteils abhängige Änderung der Induktivität (L) des Primärteils ein Maß für die Position des Sekundärteils liefert.

**12.** Transportvorrichtung nach einem der Ansprüche 9 — 11, **dadurch gekennzeichnet, dass** zur Bestimmung des aktuellen Werts der Induktivität (L) der zeitliche Verlauf des durch den Primärteil fließenden Stroms (I) erfasst wird und in der Rechnereinheit daraus die zeitliche Ableitung ($I_t$) des Stromes (I) gebildet wird.

**13.** Transportvorrichtung nach einem der Ansprüche 1 — 12, **dadurch gekennzeichnet, dass** jedem Primärteil ein Antriebsverstärker (9) mit einer Stromregeleinheit zugeordnet ist, mittels dessen in Abhängigkeit der aktuellen Positionen ein an diesem vorbeibewegtes Sekundärteil beschleunigbar ist.

**14.** Transportvorrichtung nach Anspruch 13, **dadurch gekennzeichnet, dass** die Antriebsverstärker (9) an eine zentrale Steuereinheit (10) angeschlossen sind.

**15.** Transportvorrichtung nach Anspruch 14, **dadurch gekennzeichnet, dass** die für die einzelnen Primärteile erfassten Positionswerte von Sekundärteilen in die Steuereinheit (10) eingelesen werden, wodurch in der Steuereinheit (10) der Übergang von Sekundärteilen von einem Primärteil zu einem benachbarten Primärteil erfassbar ist.

**16.** Transportvorrichtung nach einem der Ansprüche 1 — 15, **dadurch gekennzeichnet, dass** diese Bestandteil einer Folienreckanlage (1) ist.

**17.** Transportvorrichtung nach Anspruch 16, **dadurch gekennzeichnet, dass** die Sekundärteile von Kluppen (3) gebildet sind, welche zur Fixierung von zu streckenden Folien dienen.

**18.** Transportvorrichtung nach einem der Ansprüche 16 oder 17, **dadurch gekennzeichnet, dass** dieser Schaltmittel zur Umschaltung der Betriebsart einer Folienreckanlage (1) zugeordnet sind.

**19.** Transportvorrichtung nach Anspruch 18, **dadurch gekennzeichnet, dass** die Umschaltung der Betriebsart bei einer vorgebbaren Grenzgeschwindigkeit der Sekundärteile erfolgt.

**20.** Transportvorrichtung nach Anspruch 18, **dadurch gekennzeichnet, dass** bei Geschwindigkeiten oberhalb der Grenzgeschwindigkeit eine Positionsregelung der Sekundärteile in Abhängigkeit von Positionswerten, die durch Bestimmung der induzierten Spannungen $U_{ind}$ in den Primärteilen ermittelt werden, erfolgt.

**21.** Transportvorrichtung nach Anspruch 20, **dadurch gekennzeichnet, dass** bei Geschwindigkeiten unterhalb der Grenzgeschwindigkeit eine Positionsregelung der Sekundärteile in Abhängigkeit von Positionswerten, die durch Ermittlung der Induktivitäten (L) in den Primärteilen ermittelt werden, erfolgt.

**22.** Transportvorrichtung nach Anspruch 20, **dadurch gekennzeichnet, dass** bei Geschwindigkeiten unterhalb der Grenzgeschwindigkeit eine Steuerung der Bewegungen der Sekundärteile in einem Schrittbetrieb erfolgt.

**23.** Transportvorrichtung nach einem der Ansprüche 1 — 15, **dadurch gekennzeichnet, dass** diese anstelle einer Linearmotorstrecke (2) einen rotativen Synchronmotor mit rotationssymmetrisch angeordneten Primärteilen und Sekundärteilen aufweist.

**Fig. 1**

V

3

2

<u>1</u>

**Fig. 2**

7          7          7          7

6          6          6          6

N          S

<u>2</u>

X

5

A

# Fig. 3

# Fig. 4

## Fig. 5

# Fig. 6